# EUROPÄISCHE PATENTSCHRIFT

(11) **EP 1 915 526 B1**
(45) Veröffentlichungstag und Bekanntmachung des Hinweises auf die Patenterteilung: **18.02.2009**
(21) Anmeldenummer: 06752573.3
(22) Anmeldetag: 12.06.2006
(51) Int. Cl.: F02M 53/02

(54) **BRENNSTOFFEINSPRITZSYSTEM**
FUEL-INJECTION SYSTEM
SYSTEME D'INJECTION DE CARBURANT

(30) Priorität: 05.08.2005 DE 102005036952
(43) Veröffentlichungstag der Anmeldung: 30.04.2008
(73) Patentinhaber: ROBERT BOSCH GMBH, 70442 Stuttgart (DE)
(72) Erfinder: HAAG, Gottlob, 71706 Marktgroeningen (DE); POSSELT, Andreas, 75417 Muehlacker (DE); LORENZ, Marko, 71723 Grossbottwar (DE)
(86) Internationale Anmeldenummer: PCT/EP2006/063092
(87) Internationale Veröffentlichungsnummer: WO 2007/028663

(56) Entgegenhaltungen:
- EP-A- 0 247 697
- WO-A-20/05024225
- GB-A- 1 373 933
- US-H- H1 820

## Beschreibung

### Stand der Technik

Die Erfindung geht aus von einem Brennstoffeinspritzsystem nach der Gattung des Hauptanspruchs.

Der Stand der Technik bezieht sich unter anderem auf ein Brennstoffeinspritzventil mit einer Heizvorrichtung zur Beheizung des Brennstoffs an seinem ablaufseitigen Ende, wie es als solches in der DE 196 29 589 A1 beschrieben ist. In dem in der DE 196 29 589 A1 dargestelltem Brennstoffeinspritzventil wird einerseits die Verlustleistung der stromdurchflossenen Magnetspule zum Beheizen des Brennstoffs benutzt, andererseits ist als Wärmeaustausch-Abschnitt ein als Wärmepumpe arbeitendes Peltierelement vorgesehen, das die Ventilnadel und den darin sich befindlichen Brennstoff umfasst.

Nachteilig dabei ist, dass der Brennstoff in dem in der DE 196 29 589 A1 beschriebenen Brennstoffeinspritzventil auch beheizt wird, wenn er eine für die Zündung bereits ausreichende Temperatur aufweist. Dadurch wird dem Brennstoff eventuell zu viel Wärmeenergie zugeführt.

Ferner ist es von Nachteil, für die Beheizung des Brennstoffs im Brennstoffeinspritzventil ein Peltierelement als Wärmepumpe vorzusehen, da dieses relativ kostenintensiv ist und bei einem Einsatz im Brennstoffeinspritzventil eine hohe elektrische Leistung benötigt.

Aus der DE 20 57 972 A1 ist eine Kaltstart- und Warmlaufeinrichtung für Brennkraftmaschinen mit Fremdzündung bekannt, die eine Beheizung des Brennstoffeinspritzventils durch einen im Zulaufstutzen des Brennstoffeinspritzventils fest verbauten elektrisch betriebenen Heizkörper vorsieht.

Nachteilig dabei ist, dass für die beschriebene Kaltstart- und Warmlaufeinrichtung ein Brennstoffeinspritzventil vorgesehen ist, das einen im Zulaufstutzen fest verbauten elektrisch betriebenen Heizkörper aufweist. Brennstoffeinspritzventile ohne fest verbauten Heizkörper können in der in der DE 20 57 972 A1 beschriebenen Einrichtung keine Verwendung finden.

Es ist daher Aufgabe der vorliegenden Erfindung das Brennstoffeinspritzventil vor dem Start des Motors unabhängig von einem Steuergerät zu heizen, ohne unnötig viel Wärmemenge zuzuführen, wobei ein Heizen verhindert werden soll, wenn die Brennstofftemperatur des Brennstoffs im Brennstoff-Rail oberhalb einer vorher festgelegten Schwellentemperatur liegt.

### Vorteile der Erfindung

Ein Vorteil der Erfindung besteht darin, dass das Heizkonzept des erfindungsgemäßen Brennstoffeinspritzsystems unabhängig von der Steuergeräteplattform und von der Art des verwendeten Brennstoffeinspritzventils ist, da der beheizbare Adapter sowohl in ein direkt einspritzendes Brennstoffeinspritzventil als auch in ein Brennstoffeinspritzventil für Saugrohreinspritzung eingeführt werden kann.

Daraus ergibt sich der Vorteil, dass die einzelnen Komponenten des erfindungsgemäßen Brennstoffeinspritzsystems auch für Fremdsysteme vertrieben werden können.

Ein weiterer Vorteil der Erfindung ist die Erhöhung der Startsicherheit, insbesondere bei Verwendung von ethanolhaltigen Kraftstoffen durch eine von der Brennstofftemperatur abhängige Beheizung des Brennstoffs.

Ein weiterer Vorteil des erfindungsgemäßen Brennstoffeinspritzventils besteht darin, dass im kalten Zustand die Leerlaufqualität des Motors durch eine Beheizung des Brennstoffs mittels des erfindungsgemäßen Brennstoffeinspritzsystems verbessert ist.

Weiterhin ist von Vorteil, dass der Brennstoff unabhängig vom Start des Motors bzw. von der Betätigung der Zündung beheizt werden kann.

Das in der Erfindung beschriebene Brennstoffeinspritzsystem ist einfach, robust und flexibel, so dass damit ebenfalls ein kostenoptimierender Effekt bei der Produktion erzielt wird.

Dadurch, dass beheizter Brennstoff in den Brennraum eingespritzt wird ist eine vollständige Verbrennung des Brennstoffs gewährleistet, was vorteilhafterweise eine verminderte Schadstoffbelastung nach sich zieht.

Von Vorteil ist es auch, dass die Gefahr der Blasenbildung bei der Beheizung des Brennstoffs vermieden wird, da Wärmeenergie nur dann zugeführt wird, wenn die Schwellentemperatur des Brennstoffs unterschritten wird. Vorteilhafterweise wird der Brennstoff nur beheizt, wenn er zu kalt ist.

Durch die in den Unteransprüchen aufgeführten Maßnahmen sind vorteilhafte Weiterbildungen und Verbesserungen des im Anspruch 1 angegebenen Brennstoffeinspritzventils möglich.

### Zeichnung

Ein Ausführungsbeispiel der Erfindung ist in der Zeichnung vereinfacht dargestellt und in der nachfolgenden Beschreibung näher erläutert. Es zeigt:

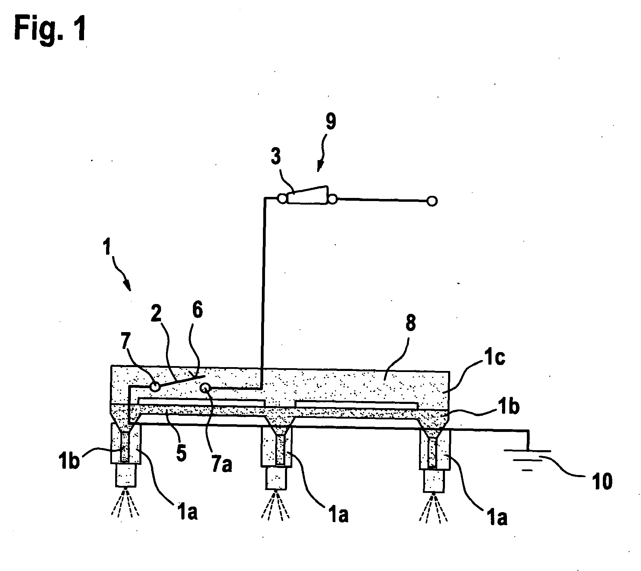

- Fig. 1.: ein erfindungsgemäßes Brennstoffeinspritzsystem bestehend aus mehreren Brennstoffeinspritzventilen, einem beheizbaren Adapter und einem Brennstoff-Rail.

### Beschreibung des Ausführungsbeispiels

Fig. 1 zeigt ein erfindungsgemäßes Brennstoffeinspritzsystem 1 mit zumindest einem Brennstoffeinspritzventil 1a und einem beheizbaren Adapter 1b, der an ein Brennstoff-Rail 1c und an das Brennstoffeinspritzventil 1a des Brennstoffeinspritzsystems 1 angeschlossen ist, wobei in dem Brennstoff-Rail 1c ein Thermoschalter 2 vorgesehen ist, der mit einer externen Kontakt herstellenden Einrichtung 3 und mit dem beheizbaren Adapter 1b verbunden ist.

Der Thermoschalter 2 weist einen Thermosensor auf, der bei einer Temperatur des sich im Brennstoff-Rail 1c befindenden Brennstoffs 8, die unterhalb einer vorher festgelegten Schwelltemperatur liegt, einen Schaltvorgang des Thermoschalters 2 auslöst. Der Thermoschalter 2 selbst kann entweder als Bimetallstreifen oder als Thermistor ausgeführt sein. In dem beheizbaren Adapter 1b sind elektrische Heizelemente 5 vorgesehen, die den Brennstoff 8 beheizen, der von dem Brennstoff-Rail 1c in das entsprechende Brennstoffeinspritzventil 1a fließt. Eine Beheizung des Brennstoffs 8 ist von Vorteil, wenn der fein zerstäubte Brennstoff 8 aufgrund eines erkalteten Brennraums an der kalten Brennraumwand kondensieren würde.

Damit der Thermoschalter 2 innerhalb des Brennstoff-Rails 1c, in welchem ein gewisser Druck herrscht, in einer stabilen Stellung verbleibt, besteht er aus einem druckbeständigen Material. Um eine chemische Reaktion des den Thermoschalter 2 unmittelbar umgebenden Brennstoffs 8 mit dem Oberflächenmaterial des Thermoschalters 2 auszuschließen, besteht die Oberfläche 6 des Thermoschalters 2 aus einem kraftstoffbeständigen Material.

Der Thermoschalter 2 weist zumindest zwei elektrische Anschlüsse 7, 7a auf, wobei ein elektrischer Anschluss 7a mit der externen Kontakt herstellenden Einrichtung 3 verbunden ist. Eine geschlossene Schalterstellung 9 der Einrichtung 3 ist zumindest eine Vorraussetzung für die Betätigung des Thermoschalters 2 und somit für die Beheizung des Brennstoffs 8.

Die externe Einrichtung 3 kann z. B. ein Türkontaktschalter, eine Fernbedienung, ein Sitzsensor o. ä. sein, durch den es möglich ist, bereits vor dem Starten der Brennkraftmaschine (z. B. 10 bis 30 s) die Beheizung des Brennstoffs 8 in Gang zu setzen.

Die Schalterstellung des externen Türkontaktschalters ist z. B. mit einer Betätigung einer Türe gekoppelt. Wird diese Türe geöffnet, so geht die Schalterstellung des Türkontaktschalters von einer offenen Schalterstellung in die geschlossene Schalterstellung 9 über und die Beheizung des Brennstoffs 8 beginnt.

Die elektrischen Heizelemente 5 sind in den beheizbaren Adaptern 1b angeordnet und werden zum einen mit einem Kontakt 7 des Thermoschalters 2 und zum anderen mit einer Schaltungsmasse 10 verbunden.

Der Thermoschalter 2 ist in dem Brennstoff-Rail 1c derart angeordnet, dass er vollständig in den sich im Brennstoff-Rail 1c befindlichen Brennstoff 8 eintaucht und es somit ermöglicht ist, dass abhängig von der Temperatur des Brennstoffs 8 ein Stromkreis zum Bestromen der elektrischen Heizelemente 5 in dem beheizbaren Adapter 1b geschlossen wird.

Die Erfindung ist nicht auf die dargestellten Ausführungsbeispiele beschränkt und beispielsweise auf direkt einspritzende Brennstoffeinspritzventile und auf Brennstoffeinspritzventile, die in ein Saugrohr einspritzen, anwendbar.

## Patentansprüche

1. Brennstoffeinspritzsystem (1) mit zumindest einem Brennstoffeinspritzventil (1a) und einem beheizbaren Adapter (1b), der an ein Brennstoff-Rail (1c) und an das Brennstoffeinspritzventil (1a) des Brennstoffeinspritzsystems (1) angeschlossen ist,
wobei in dem Brennstoff-Rail (1c) ein Thermoschalter (2) vorgesehen ist, der mit einer externen Kontakt herstellenden Einrichtung (3) und mit dem beheizbaren Adapter (1b) verbunden ist.

2. Brennstoffeinspritzsystem nach Anspruch 1,
**dadurch gekennzeichnet, dass** der Thermoschalter (2) einen Thermosensor aufweist.

3. Brennstoffeinspritzsystem nach Anspruch 1,
**dadurch gekennzeichnet, dass** in dem beheizbaren Adapter (1b) elektrische Heizelemente (5) vorgesehen sind.

4. Brennstoffeinspritzsystem nach Anspruch 1 oder 2,
**dadurch gekennzeichnet, dass** der Thermoschalter (2) als Thermistor oder als Bimetallstreifen ausgeführt ist.

5. Brennstoffeinspritzsystem nach einem der Ansprüche 1 bis 4,
**dadurch gekennzeichnet, dass** der Thermoschalter (2) aus druckbeständigem Material besteht.

6. Brennstoffeinspritzsystem nach einem der Ansprüche 1 bis 5,
**dadurch gekennzeichnet, dass** eine Oberfläche (6) des Thermoschalters (2) aus kraftstoffbeständigen Material besteht.

7. Brennstoffeinspritzsystem nach einem der Ansprüche 1 bis 6,
**dadurch gekennzeichnet, dass** der Thermoschalter (2) in den sich im Brennstoff-Rail (1c) befmdlichen Brennstoff(8) vollständig eintaucht.

8. Brennstoffeinspritzsystem nach einem der Ansprüche 1 bis 7,
**dadurch gekennzeichnet, dass** der Thermoschalter (2) zumindest zwei elektrische Anschlüsse (7, 7a) aufweist.

9. Brennstoffeinspritzsystem nach Anspruch 8,
**dadurch gekennzeichnet, dass** ein elektrischer Anschluss (7a) des Thermoschalters (2) mit der Einrichtung (3) verbunden ist.

10. Brennstoffeinspritzsystem nach Anspruch 9,
**dadurch gekennzeichnet, dass** eine geschlossene Schalterstellung (9) der Einrichtung (3) eine Vorraussetzung für die Betätigung des Thermoschalters (2) ist.

11. Brennstoffeinspritzsystem nach einem der vorhergehenden Ansprüche,
**dadurch gekennzeichnet,**
**dass** die Kontakt herstellende Einrichtung (3) ein Türkontaktschalter, eine Fernbedienung oder ein Sitzsensor ist.

12. Brennstoffeinspritzsystem nach einem der vorhergehenden Ansprüche,
**dadurch gekennzeichnet,**
**dass** die Einrichtung (3) unabhängig vom Betrieb einer Brennkraftmaschine betätigbar ist.

13. Brennstoffeinspritzsystem nach Anspruch 11,
**dadurch gekennzeichnet,**
**dass** eine Betätigung des Türkontaktschalters mit einer Betätigung einer Türe gekoppelt ist.

14. Brennstoffeinspritzsystem nach einem der Ansprüche 1 bis 13,
**dadurch gekennzeichnet,**
**dass** elektrische Heizelemente (5) des beheizbaren Adapters (1b) stromdurchflossen sind, wenn die Einrichtung (3) und der Thermoschalter (2) jeweils eine geschlossene Schalterstellung (9) aufweisen.

## Claims

1. Fuel injection system (1) having at least a fuel injection valve (1a) and a heatable adapter (1b) which is connected to a fuel rail (1c) and to the fuel injection valve (1a) of the fuel injection system (1), with a thermal switch (2), which is connected to an external contact-making device (3) and to the heatable adapter (1b), being provided in the fuel rail (1c).

2. Fuel injection system according to Claim 1, **characterized in that** the thermal switch (2) has a thermal sensor.

3. Fuel injection system according to Claim 1, **characterized in that** electrical heating elements (5) are provided in the heatable adapter (1b).

4. Fuel injection system according to Claim 1 or 2, **characterized in that** the thermal switch (2) is designed as a thermistor or as a bimetallic strip.

5. Fuel injection system according to one of Claims 1 to 4, **characterized in that** the thermal switch (2) comprises pressure-resistant material.

6. Fuel injection system according to one of Claims 1 to 5, **characterized in that** a surface (6) of the thermal switch (2) comprises fuel-resistant material.

7. Fuel injection system according to one of Claims 1 to 6, **characterized in that** the thermal switch (2) is fully immersed in the fuel (8) which is located in the fuel rail (1c).

8. Fuel injection system according to one of Claims 1 to 7, **characterized in that** the thermal switch (2) has at least two electrical connections (7, 7a).

9. Fuel injection system according to Claim 8, **characterized in that** an electrical connection (7a) of the thermal switch (2) is connected to the device (3).

10. Fuel injection system according to Claim 9, **characterized in that** a closed switch position (9) of the device (3) is a precondition for operation of the thermal switch (2).

11. Fuel injection system according to one of the preceding claims, **characterized in that** the contact-making device (3) is a door contact switch, a remote control means or a seat sensor.

12. Fuel injection system according to one of the preceding claims, **characterized in that** the device (3) can be operated independently of operation of an internal combustion engine.

13. Fuel injection system according to Claim 11, **characterized in that** operation of the door contact switch is coupled to operation of a door.

14. Fuel injection system according to one of Claims 1 to 13, **characterized in that** current flows through electrical heating elements (5) of the heatable adapter (1b) when the device (3) and the thermal switch (2) are each in a closed switch position (9).

## Revendications

1. Système d'injection de carburant (1) comprenant au moins une soupape d'injection de carburant (1a) et un adaptateur chauffable (1b), qui est raccordé à un rail de carburant (1c) et à la soupape d'injection de carburant (1a) du système d'injection de carburant (1),
un commutateur thermique (2) étant prévu dans le rail de carburant (1c), lequel est connecté à un dispositif (3) créant un contact extérieur et à l'adaptateur chauffable (1b).

2. Système d'injection de carburant selon la revendication 1,
**caractérisé en ce que** le commutateur thermique (2) présente un capteur thermique.

3. Système d'injection de carburant selon la revendication 1,
**caractérisé en ce que** des éléments chauffants électriques (5) sont prévus dans l'adaptateur chauffant (1b).

4. Système d'injection de carburant selon la revendication 1 ou 2,
**caractérisé en ce que** le commutateur thermique (2) est réalisé sous forme de thermistor ou de bilame.

5. Système d'injection de carburant selon l'une quelconque des revendications 1 à 4,
**caractérisé en ce que** le commutateur thermique (2) se compose de matériau résistant à la pression.

6. Système d'injection de carburant selon l'une quelconque des revendications 1 à 5,
**caractérisé en ce qu'**une surface (6) du commutateur thermique (2) se compose de matériau résistant aux carburants.

7. Système d'injection de carburant selon l'une quelconque des revendications 1 à 6,
**caractérisé en ce que** le commutateur thermique (2) plonge complètement dans le carburant (8) se trouvant dans le rail de carburant (1c).

8. Système d'injection de carburant selon l'une quelconque des revendications 1 à 7,
**caractérisé en ce que** le commutateur thermique (2) présente au moins deux raccords électriques (7, 7a) .

9. Système d'injection de carburant selon la revendication 8,
**caractérisé en ce qu'**un raccord électrique (7a) du commutateur thermique (2) est connecté au dispositif (3).

10. Système d'injection de carburant selon la revendication 9,
**caractérisé en ce qu'**une position de commutation fermée (9) du dispositif (3) est une condition d'actionnement du commutateur thermique (2).

11. Système d'injection de carburant selon l'une quelconque des revendications précédentes,
**caractérisé en ce que** le dispositif (3) créant le contact est un commutateur de contact de porte, une commande à distance ou un capteur de siège.

12. Système d'injection de carburant selon l'une quelconque des revendications précédentes,
**caractérisé en ce que**
le dispositif (3) peut être actionné indépendamment du fonctionnement d'un moteur à combustion interne.

13. Système d'injection de carburant selon la revendication 11,
**caractérisé en ce**
**qu'**un actionnement du commutateur de contact de porte est accouplé à un actionnement d'une porte.

14. Système d'injection de carburant selon l'une quelconque des revendications 1 à 13,
**caractérisé en ce que**
des éléments chauffants électriques (5) de l'adaptateur chauffable (1b) sont parcourus par un courant lorsque le dispositif (3) et le commutateur thermique (2) présentent chacun une position de commutation fermée (9).
